# EUROPEAN PATENT APPLICATION

(11) **EP 4 734 332 A1**
(43) Date of publication of application: **29.04.2026**
(21) Application number: 24831547.5
(22) Date of filing: 29.05.2024
(51) Int. Cl.: H02K 1/18

(54) **STATOR STRUCTURE OF GENERATOR**

(30) Priority: 26.06.2023 JP 2023104432
(71) Applicant: KAWASAKI JUKOGYO KABUSHIKI KAISHA, Kobe-shi, Hyogo 650-8670 (JP)
(72) Inventor: SHIBAYAMA, Yoshiyasu, Kobe-shi, Hyogo 650-8670 (JP); MAESATO, Hikaru, Kobe-shi, Hyogo 650-8670 (JP); OKUWA, Tatsuya, Kobe-shi, Hyogo 650-8670 (JP)
(74) Representative: Dantz, Jan Henning
(86) International application number: PCT/JP2024/019665
(87) International publication number: WO 2025/004677

(57) **Abstract**

Provided is a stator structure of a power generator, the stator structure making it possible to suppress displacement of split cores from each other in an axial direction. The stator structure of a power generator includes: split cores that are located in a circumferential direction; an attachment that is overlaid, in an axial direction, on axial end surfaces of at least two adjacent split cores among the split cores; and coils that are wound around the split cores and the attachment.

## Description

### Technical Field

The present disclosure relates to a stator structure for use in a power generator.

### Background Art

Patent Literature 1 discloses a power generator including a stator core that is formed by split cores located in a circumferential direction. In Patent Literature 1, of the split cores adjacent to each other in the circumferential direction, one split core includes a recess, and the other split core includes a projection, and the recess and the projection are fitted together.

### Citation List

### Patent Literature

PTL 1: Japanese Laid-Open Patent Application Publication No. 2011-176902

### Summary of Invention

### Technical Problem

However, in the configuration disclosed in Patent Literature 1, displacement of the split cores in the axial direction may occur.

In view of the above, an object of one aspect of the present disclosure is to provide a stator structure of a power generator, the stator structure making it possible to suppress displacement of the split cores in the axial direction.

### Solution to Problem

One aspect of the present disclosure is a stator structure of a power generator, the stator structure including: split cores that are located in a circumferential direction; an attachment that is overlaid, in an axial direction, on axial end surfaces of at least two adjacent split cores among the split cores; and coils that are wound around the split cores and the attachment.

### Advantageous Effects of Invention

One aspect of the present disclosure makes it possible to suppress displacement, in the axial direction, of two split cores that are adjacent to each other in the circumferential direction.

### Brief Description of Drawings

FIG. 1 is a sectional view of a power generator including a stator structure according to Embodiment 1.
FIG. 2 is a perspective view of the stator structure of the power generator of FIG. 1.
FIG. 3 is a perspective view of a split core, attachments, and a coil in the stator structure of FIG. 2.
FIG. 4 is a sectional view of a portion of the split core of FIG. 3, the portion being wound with the coil.
FIG. 5 is a perspective view of a holder and the split core before the holder is attached to the split core, in a stator structure according to Embodiment 2.
FIG. 6 is a perspective view of the split core of FIG. 5 in a state where the holder is attached to the split core and the attachments are about to be attached to the split core.
FIG. 7 is a perspective view of the holder, the attachments, and the split core of FIG. 5, which are wound with the coil in a state where the holder and the attachments are attached to the split core.
FIG. 8 is a perspective view a pair of half bodies of a stator structure according to Embodiment 3.
FIG. 9 is a perspective view of the split core and a holder that is formed by the pair of half bodies of FIG. 8.
FIG. 10 is a perspective view of a pair of half bodies of a stator structure according to Embodiment 4.
FIG. 11 is a perspective view of the split core and a holder that is formed by the pair of half bodies of FIG. 10.

### Description of Embodiments

Hereinafter, a stator structure of a power generator according to embodiments is described with reference to the drawings. In the present disclosure, a direction along a rotational axis X is defined as an axial direction D1; a direction in which split cores 6 are located is defined as a circumferential direction D2; and the radial direction of a circle centered on the rotational axis X is defined as a radial direction D3.

### (Embodiment 1)

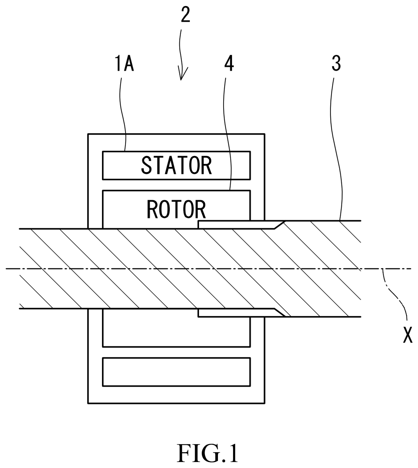

FIG. 1 is a sectional view of a power generator 2 including a stator structure 1A according to Embodiment 1. In the present embodiment, the power generator 2 is, for example, a power generator located inside a gas turbine engine. Alternatively, the power generator 2 may be installed in different equipment.

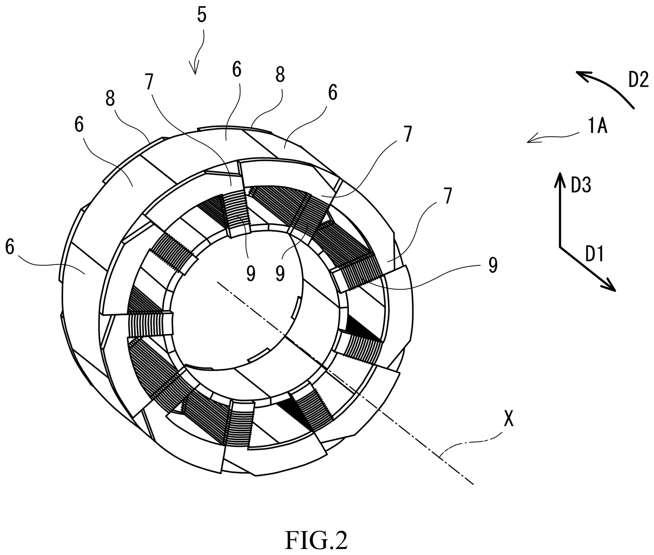

In the present embodiment, the power generator 2 located inside a gas turbine engine is described. The gas turbine engine includes a rotating shaft 3 extending in the axial direction D1 (FIG. 2). A rotor 4 is connected to the rotating shaft 3, and the stator structure 1A is located radially outward of the rotor 4. The rotational axis X of the rotor 4 coincides with the rotational axis of the rotating shaft 3. The rotating shaft 3 is received in a hollow space of the rotor 4 on the rotational axis X, and is coupled such that the rotating shaft 3 rotates together with the rotor 4. For example, the rotating shaft 3 is connected to the inner peripheral surface of the rotor 4, for example, by spline coupling. The power generator 2 generates electric power by rotation of the rotating shaft 3 and rotation of the rotor 4.

FIG. 2 is a perspective view of the stator structure 1A in the power generator 2. The stator structure 1A includes an annular stator core 5, which is formed by magnetic materials that are laminated together. The stator core 5 includes the split cores 6, which are located in the circumferential direction D2. Although the stator core 5 includes nine split cores 6, the number of split cores included therein is not particularly limited.

The stator structure 1A includes attachments 7 and 8, which are located on one side and the other side of the stator structure 1A in the axial direction D1. The number of attachments located on each of the one side and the other side in the axial direction D1 is at least one. The attachments 7 and the attachments 8 are end plates located on the axial end surfaces of the split cores 6. The stator structure 1A further includes coils 9, which are wound around the split cores 6, the attachments 7, and the attachments 8.

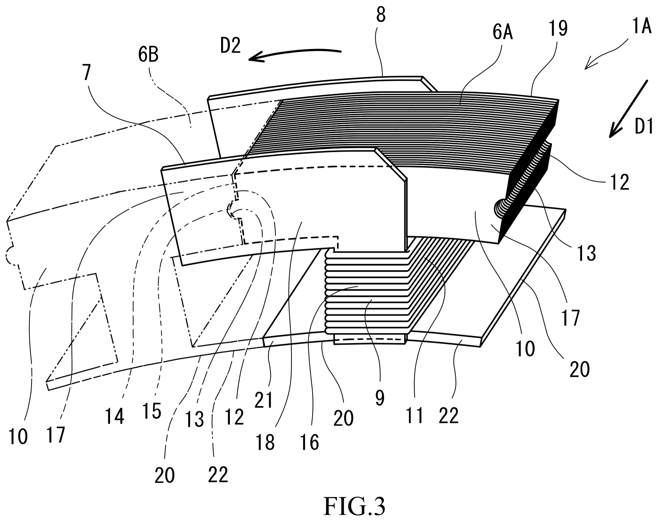

FIG. 3 is a perspective view of a first split core 6A, an attachment 7, an attachment 8, and a coil 9. FIG. 3 also shows a second split core 6B, which is adjacent to the first split core 6A in the circumferential direction D2. The second split core 6B is indicated by two-dot chain line.

As shown in FIG. 3, each of the first split core 6A and the second split core 6B of the stator core 5 includes: an arc 10, which extends in the circumferential direction; and a tooth 11, which extends from the arc 10 in the radial direction and around which the coil 9 is wound. One end surface 12 of the arc 10 in the circumferential direction D2 includes a groove 13. The other end surface 14 of the arc 10 in the circumferential direction D2 includes a projection 15. When the stator structure 1A is in an assembled state, the projection 15 of the first split core 6A is fitted to the groove 13 of the second split core 6B, which is adjacent to the first split core 6A in the circumferential direction D2.

Each of the first split core 6A and the second split core 6B includes an inner plate 20, which is a plate-shaped portion located on the radially inner end portion of the tooth 11 and which extends from the tooth 11 to both sides in the circumferential direction D2. Since each of the first split core 6A and the second split core 6B includes the inner plate 20, which is a plate-shaped portion extending from the tooth 11 in the circumferential direction D2 at the radially inner end portion of the tooth 11, a larger electric current can be generated by the power generator 2 in response to changes in a magnetic field caused by rotation of the rotor 4. This makes it possible to improve the power generation efficiency of the power generator 2.

Each of the attachment 7 and the attachment 8 includes: a base 16, which is overlaid on an axial end surface of the tooth 11 of the first split core 6A; and a stopper 18, which is overlaid on an axial end surface 17 of the arc 10 of the first split core 6A and an axial end surface 17 of the arc 10 of the second split core 6B.

The stopper 18 of each of the attachment 7 and the attachment 8 extends from the base 16 to one side in the circumferential direction D2 to form an L shape. The L shape is not limited to a strict L shape. The attachment 7 and the attachment 8 are attached corresponding to multiple split cores 6. The attachments 7 and the attachments 8 have the same shape. Alternatively, the attachments may have different shapes.

The attachment 7 and the attachment 8 are each made of an insulating material. In a case where the stator structure 1A is applied to the power generator 2 of the gas turbine engine, and the stator structure 1A is used in a high-temperature environment, desirably, the attachment 7 and the attachment 8 are each made of, for example, a heat-resistant polyimide. The present embodiment describes a mode in which the attachment 7 and the attachment 8 are each made of an insulating material. However, the above embodiment is non-limiting. The attachments 7 and 8 may each be made of a conductive material with an insulation-treated surface.

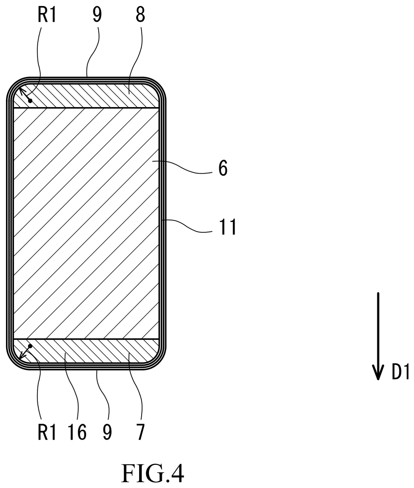

FIG. 4 is a sectional view of a portion of the first split core 6A of the stator structure 1A, the portion being wound with the coil 9, the sectional view being taken along a plane orthogonal to the tooth 11. FIG. 4 is a sectional view of a portion of the tooth 11 of the first split core 6A, the portion being wound with the coil 9 and being the middle portion in the radial direction. The attachment 7 is attached to one end surface of the tooth 11 of the first split core 6A in the axial direction D1, and the attachment 8 is attached to the other end surface of the tooth 11 of the first split core 6A in the axial direction D1. The coil 9 is wound around the attachment 7, the attachment 8, and the outer periphery of the tooth 11.

An end of a portion of the base 16 of each of the attachment 7 and the attachment 8, the portion being wound with the coil 9, is curved. Accordingly, corners of the end of each of the attachment 7 and the attachment 8 on one side in the axial direction D1, the corners being in contact with the coil 9, each have a curvature radius R1. The curvature radius of the curved portion of the attachment 7 and the curvature radius of the curved portion of the attachment 8 may be different from each other. Since the attachment 7 and the attachment 8 each have such a curved shape, a load applied to the coil 9 when the coil 9 is wound around the tooth 11 of the first split core 6A, the attachment 7, and the attachment 8 is reduced. The end of the portion of each of the attachment 7 and the attachment 8, the portion being wound with the coil 9, is not limited to the configuration having such a curved shape. Alternatively, for example, the end of the portion wound with the coil 9 may have surfaces that obliquely meet the end surface in the axial direction D1, thereby achieving a tapered shape configuration in which the corners of the end are removed.

As shown in FIG. 3, the first split core 6A includes magnetic plates 19, which are laminated together in the axial direction D1. The first split core 6A is formed by the magnetic plates 19 laminated together in the axial direction. The laminated body of the magnetic plates 19 is covered with a sheet-shaped insulating material at a portion corresponding to the tooth 11 of the split core 6A. The sheet-shaped insulating material is, for example, a resin sheet. The attachment 7 is attached to one side of the split core 6A in the axial direction D1, and the attachment 8 is attached to the other side of the split core 6A in the axial direction D1. The attachment 7 and the attachment 8 are bonded to the split core 6A, for example, with an adhesive.

The coil 9 is wound around the attachment 7, the attachment 8, and the tooth 11 of the split core 6A. The coil 9 positions the attachment 7 and the attachment 8 relative to the magnetic plates 19 while fixing the magnetic plates 19. That is, the attachment 7 and the attachment 8 can be positioned relative to the first split core 6A by the coil 9. Accordingly, displacement, in the axial direction D1, of the first split core 6A and the second split core 6B, which are adjacent to each other in the circumferential direction D2, can be suppressed.

Each of the attachment 7 and the attachment 8 includes the stopper 18. The stopper 18 is overlaid on both the axial end surface 17 of the arc 10 of the first split core 6A and the axial end surface 17 of the arc 10 of the second split core 6B. The stopper 18 is positioned relative to the first split core 6A by the coil 9. Accordingly, with the stoppers 18, displacement of the first split core 6A and the second split core 6B in the axial direction D1 can be suppressed.

Between the first split core 6A and the second split core 6B, the other end surface 12 of the arc 10 of the first split core 6A in the circumferential direction D2 and the one end surface 14 of the arc 10 of the second split core 6B in the circumferential direction D2 are in contact with each other. As previously described, the end surface 14 of the arc 10 of the first split core 6A may include the projection 15, and the end surface 12 of the arc 10 of the second split core 6B may include the groove 13. An inner plate portion 21 of the inner plate 20 of the split core 6A, the inner plate portion 21 extending from the tooth 11 to one side in the circumferential direction D2, and an inner plate portion 22 of the inner plate 20 of the split core 6B, the inner plate portion 22 extending from the tooth 11 to the other side in the circumferential direction D2, are in contact with each other. Accordingly, when the stator structure 1A is in an assembled state, the first split core 6A and the second split core 6B, which are adjacent to each other, are in contact with each other in the circumferential direction D2.

In the present embodiment, since the stopper 18 of the attachment 7 and the stopper 18 of the attachment 8 are each overlaid on both the axial end surface 17 of the arc 10 of the first split core 6A and the axial end surface 17 of the arc 10 of the second split core 6B, displacement of the first split core 6A and the second split core 6B in the axial direction D1 can be suppressed by the stoppers 18.

In the present embodiment, the end of the portion of the base 16 of each of the attachment 7 and the attachment 8, the portion being wound with the coil 9, is curved or tapered. As a result, a load applied to the coil 9 is reduced, which makes it possible to suppress, for example, wire snapping of the coil 9.

According to the present embodiment, since the attachment 7 and the attachment 8 are end plates located on the axial end surfaces of the split cores 6, the configuration of the attachment 7 and the attachment 8 can be simplified, and the manufacturing cost of the stator structure 1A can be reduced.

According to the present embodiment, since the attachments 7 have the same shape, they can be readily manufactured, and the manufacturing cost of the stator structure 1A can be reduced.

According to the present embodiment, the circumferential end surface 12 of the second split core 6B includes the groove 13, and the circumferential end surface 14 of the arc 10 of the first split core 6A includes the projection 15. Displacement of the first split core 6A and the second split core 6B in the radial direction can be suppressed by fitting the projection 15 into the groove 13.

The above embodiment has described the configuration in which the attachment 7 and the attachment 8 are each L-shaped. However, the above embodiment is non-limiting. The number and shape of the attachments 7 and those of the attachments 8 are not particularly limited. The attachments 7 and 8 may be attached to every pair of adjacent split cores, or may be attached to some of the split cores. The attachments may have any shape, as long as by being located on the axial end surfaces of at least two split cores that are adjacent to each other in the circumferential direction, the attachments can position these split cores in the axial direction. The attachment 7 may be, for example, T-shaped. All of the attachments 7 and the attachments 8 need not have the same shape. Among them, particular attachments may have a different shape.

### (Embodiment 2)

Next, a stator structure 1B of a power generator according to Embodiment 2 is described. In Embodiment 2, the description of common components between Embodiment 1 and Embodiment 2 is omitted. In Embodiment 2, the magnetic plates laminated together in the axial direction are covered with an insulating holder that is attached to the magnetic plates from the outer side in the circumferential direction.

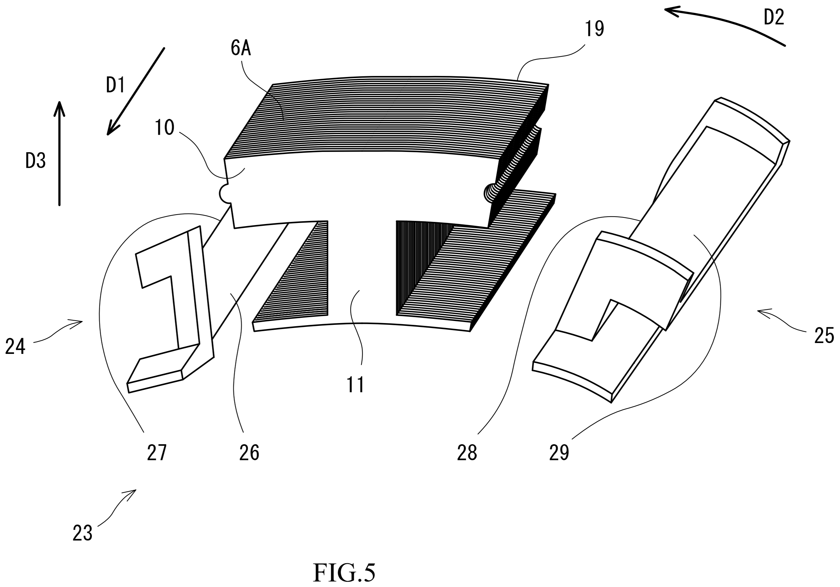

FIG. 5 is a perspective view of the first split core 6A and a holder 23 before the holder 23 is attached to the first split core 6A. The holder 23 is a pair of two half bodies, specifically a first holder 24 and a second holder 25, separable from each other in the circumferential direction D2. The holder 23 may be made separable into more than two segments. In the stator structure 1B of the power generator, the holder 23 is attached to the first split core 6A from both sides in the circumferential direction.

The first holder 24 and the second holder 25 of the holder 23 are each made of an insulating material. The first holder 24 and the second holder 25 are each made of, for example, a polyimide. The present embodiment describes a mode in which the first holder 24 and the second holder 25 are each made of an insulating material. However, the above embodiment is non-limiting. The first holder 24 and the second holder 25 may each be a holder with an insulation-treated surface.

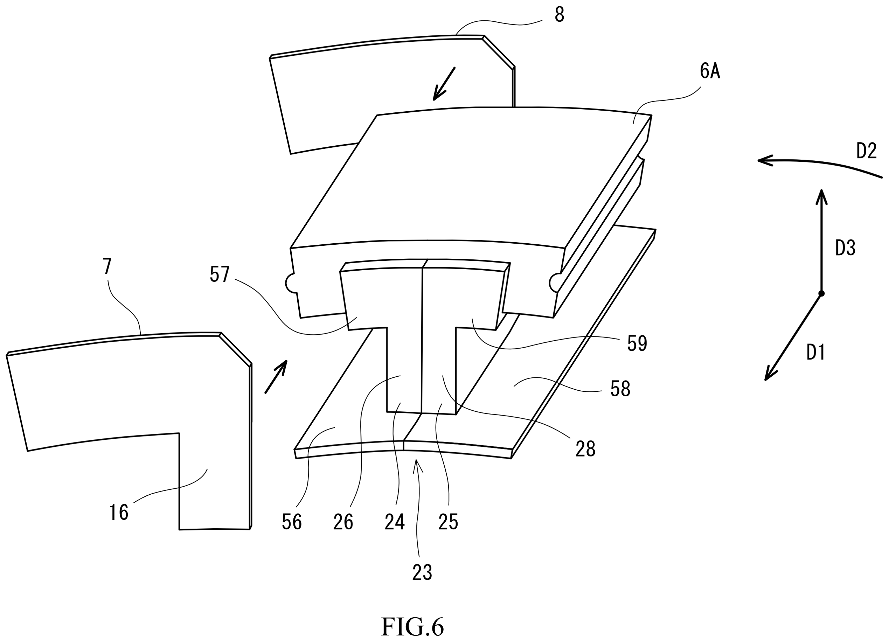

FIG. 6 is a perspective view of the first split core 6A in a state where the first holder 24 and the second holder 25 are attached to the first split core 6A and the attachment 7 and the attachment 8 are about to be attached to the first split core 6A. As shown in FIG. 6, the first holder 24 includes: a tooth contacting portion 26, which contacts the tooth 11 of the first split core 6A; an arc contacting portion 27 (FIG. 5), which contacts the inner surface of the arc 10 of the first split core 6A in the radial direction; a plate-shaped inner protrusion 56, which is located on the inner side of the tooth contacting portion 26 in the radial direction and which protrudes from the tooth contacting portion 26 outward in the axial direction D1 and outward in the circumferential direction D2; and an outer protrusion 57, which is located on the outer side of the tooth contacting portion 26 in the radial direction and which protrudes from the tooth contacting portion 26 outward in the circumferential direction D2.

The second holder 25 includes: a tooth contacting portion 28, which contacts the tooth 11 of the first split core 6A; an arc contacting portion 29 (FIG. 5), which contacts the inner surface of the arc 10 of the first split core 6A in the radial direction; a plate-shaped inner protrusion 58, which is located on the inner side of the tooth contacting portion 28 in the radial direction and which protrudes from the tooth contacting portion 28 outward in the axial direction D1 and outward in the circumferential direction D2; and an outer protrusion 59, which is located on the outer side of the tooth contacting portion 28 in the radial direction and which protrudes from the tooth contacting portion 28 outward in the circumferential direction D2.

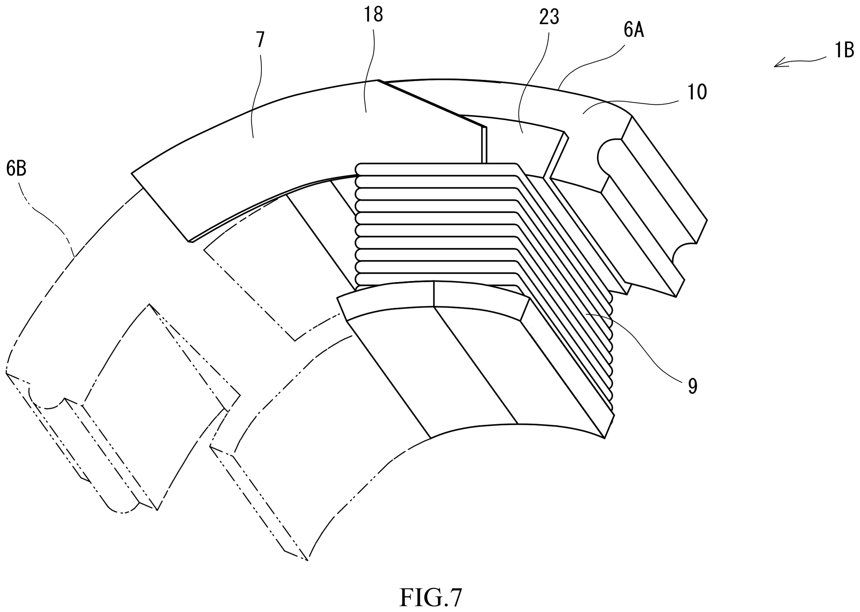

FIG. 7 is a perspective view of the holder 23 and the first split core 6A, which are wound with the coil 9 in a state where the attachment 7 and the attachment 8 are attached to the first split core 6A. In FIG. 7, the second split core 6B, which is adjacent to the first split core 6A in the circumferential direction, is indicated by two-dot chain line.

As shown in FIG. 7, the holder 23 is attached to the first split core 6A from both sides in the circumferential direction. The attachment 7 is attached to one axial end surface of the holder 23, and the attachment 8 is attached to the other axial end surface of the holder 23. The attachment 7 is attached to the holder 23 such that the stopper 18 of the attachment 7 is overlaid on both the axial end surface of the first split core 6A and the axial end surface of the second split core 6B. Similarly, the attachment 8 is attached to the holder 23 such that the stopper of the attachment 8 is overlaid on both the axial end surface of the first split core 6A and the axial end surface of the second split core 6B.

As shown in FIG. 6, the attachment 7 is attached to the holder 23 such that the base 16 of the attachment 7 is in contact with a portion of the holder 23, the portion holding the tooth 11 of the first split core 6A. Similarly, the attachment 8 is attached to the holder 23 such that the base of the attachment 8 is in contact with a portion of the holder 23, the portion holding the tooth 11 of the first split core 6A. The attachment 7 and the attachment 8 may be attached by using, for example, an adhesive. However, this is a non-limiting example.

As shown in FIG. 7, the coil 9 is wound around the attachment 7, the attachment 8, and the tooth 11 of the split core 6A. The coil 9 positions the attachment 7 and the attachment 8 relative to the holder 23 while fixing the holder 23 attached to the magnetic plates 19. That is, the holder 23, the attachment 7, and the attachment 8 can be positioned relative to the first split core 6A by the coil 9. Accordingly, displacement, in the axial direction D1, of the first split core 6A and the second split core 6B, which are adjacent to each other in the circumferential direction D2, can be suppressed.

In the present embodiment, the magnetic plates 19 laminated together in the axial direction D1 are held by the holder 23 in the circumferential direction and the axial direction by means of the first holder 24 and the second holder 25. Further, in the radial direction D3, the magnetic plates 19 are held by the arc contacting portion 27 of the first holder 24 and the arc contacting portion 29 of the second holder 25. As a result, the magnetic plates 19 laminated together in the axial direction D1 are stably held by the holder 23.

According to the present embodiment, the first holder 24 includes the inner protrusion 56 and the outer protrusion 57, whereas the second holder 25 includes the inner protrusion 58 and the outer protrusion 59, and when the coil 9 is wound around the first split core 6A, the outer peripheral surface of the tooth contacting portion 26 and the outer peripheral surface of the tooth contacting portion 28 each serve as a guide for the winding of the coil 9. This makes it possible to readily wind the coil 9 around the first split core 6A.

### (Embodiment 3)

Next, a stator structure of a power generator according to Embodiment 3 is described. In Embodiment 3, the description of common components between Embodiment 1 and Embodiment 3, and those between Embodiment 2 and embodiment 3 is omitted. In Embodiment 3, the attachment is attached to a holder that is formed by a pair of half bodies.

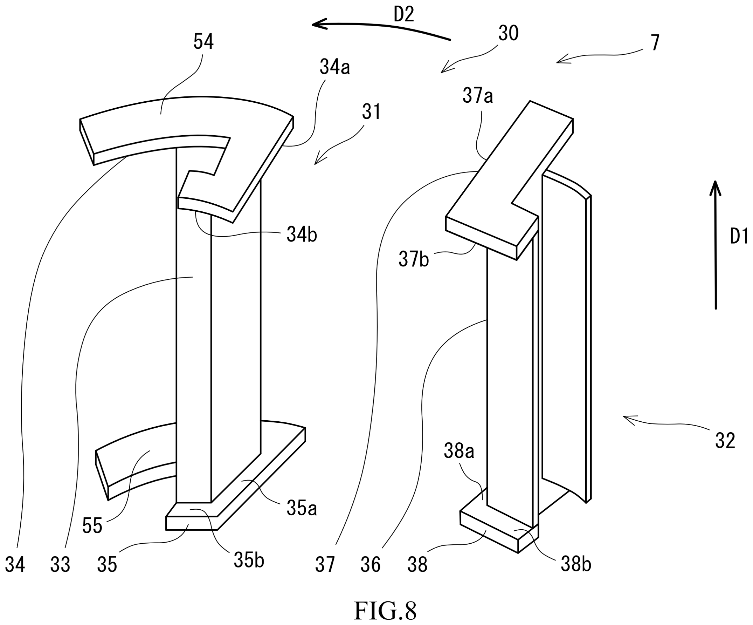

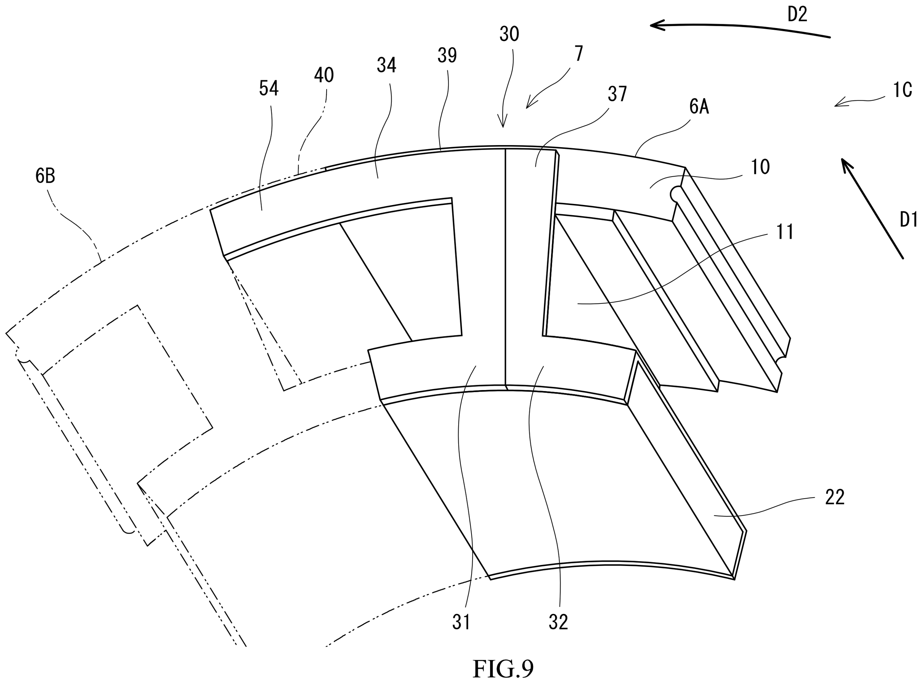

FIG. 8 is a perspective view of a holder 30 formed by a pair of half bodies. A first half body 31 includes: a first side plate 33, which is overlaid on the tooth 11 of the first split core 6A (FIG. 9) from one side in the circumferential direction D2 and which extends in the axial direction D1; a first end plate 34, which is connected to one end of the first side plate 33 in the axial direction D1 and which is overlaid on the axial end surface on one side of the first split core 6A in the axial direction D1; and a second end plate 35, which is connected to the other end of the first side plate 33 in the axial direction D1 and which is overlaid on the axial end surface on the other side of the first split core 6A in the axial direction D1. A second half body 32 includes: a second side plate 36, which is overlaid on the tooth 11 of the first split core 6A (FIG. 9) from the other side in the circumferential direction D2 and which extends in the axial direction D1; a first end plate 37, which is connected to one end of the second side plate 36 in the axial direction D1 and which is overlaid on the axial end surface on one side of the first split core 6A in the axial direction D1; and a second end plate 38, which is connected to the other end of the second side plate 36 in the axial direction D1 and which is overlaid on the axial end surface on the other side of the first split core 6A in the axial direction D1.

As shown in FIG. 8, the first end plate 34 and the second end plate 35 of the first half body 31 include a stopper 54 and a stopper 55, respectively, each of which extends in the circumferential direction and each of which contacts both the first split core 6A and the second split core 6B adjacent to the second split core 6A to position the first split core 6A and the second split core 6B in the axial direction. The first end plate 34 and the second end plate 35 of the first half body 31 include a contacting portion 34a and a contacting portion 35a, respectively, which contact the axial end surfaces of the tooth 11 of the first split core 6A. The first end plate 34 and the second end plate 35 further include a contacting portion 34b and a contacting portion 35b, respectively, which contact the axial end surfaces of the inner plate portion 22.

Further, as shown in FIG. 8, the first end plate 37 and the second end plate 38 of the second half body 32 include a contacting portion 37a and a contacting portion 38a, respectively, which contact the axial end surfaces of the tooth 11 of the first split core 6A. The first end plate 37 and the second end plate 38 further include a contacting portion 37b and a contacting portion 38b, respectively, which contact the axial end surfaces of the inner plate portion 22. The first end plate 37 and the second end plate 38 of the second half body 32 do not extend in the circumferential direction, and the second half body 32 does not include stoppers, each of which contacts both the first split core 6A and the second split core 6B adjacent to the first split core 6A.

FIG. 9 is a perspective view of the holder 30 and the first split core 6A. In FIG. 9, the second split core 6B, which is adjacent to the first split core 6A in the circumferential direction, is indicated by two-dot chain line.

As shown in FIG. 9, the first end plate 34 of the first half body 31 is overlaid on both an axial end surface 39 on one side of the first split core 6A and an axial end surface 40 on one side of the second split core 6B adjacent to the first split core 6A. The second end plate 35 (FIG. 8) of the first half body 31 is overlaid on both an axial end surface on the other side of the first split core 6A and an axial end surface on the other side of the second split core 6B adjacent to the first split core 6A.

As shown in FIG. 8 and FIG. 9, the attachment 7 is attached to the holder 30 formed by the pair of half bodies, and suppresses displacement, in the axial direction, of the first split core 6A and the second split core 6B adjacent to each other. In the present embodiment, the attachment 7 is part of the holder 30. Portions of the holder 30, the portions serving to suppress displacement of the first split core 6A and the second split core 6B, which are adjacent to each other, are configured as the attachment 7. The holder 30 holds the first split core 6A from both sides in the circumferential direction. The holder 30 is attached to the first split core 6A by sandwiching the first split core 6A between the first half body 31 and the second half body 32, and then the coil 9 is wound around the tooth 11 of the first split core 6A over the first half body 31 and the second half body 32.

The first half body 31 and the second half body 32 of the holder 30 are each made of an insulating material. The first half body 31 and the second half body 32 are each made of, for example, a polyimide. The present embodiment describes a mode in which the first half body 31 and the second half body 32 are each made of an insulating material. However, the above embodiment is non-limiting. The first half body 31 and the second half body 32 may each be made of a conductive material with an insulation-treated surface.

According to the present embodiment, the holder 30 holds the first split core 6A, in which the magnetic plates 19 are laminated together, in the circumferential direction D2. In this manner, the first split core 6A can be stably held.

According to the present embodiment, the holder 30 with the attachment 7 attached thereto can double as an insulating material interposed between the coil 9 and the first split core 6A. This makes it possible to simplify the configuration of the power generator using the stator structure.

According to the present embodiment, the holder 30 includes the first half body 31 and the second half body 32; the first half body 31 includes the first side plate 33, the first end plate 34, and the second end plate 35; and the second half body 32 includes the first side plate 36, the first end plate 37, and the second end plate 38. Accordingly, holding the first split core 6A can be achieved by simply attaching the first half body 31 and the second half body 32 to the first split core 6A. Therefore, the configuration of the pair of half bodies 30, between which the first split core 6A is sandwiched in the circumferential direction, can be simplified.

According to the present embodiment, the first half body 31 of the holder 30 includes the first end plate 34 and the second end plate 35, and the first end plate 34 and the second end plate 35 include the stopper 54 and the stopper 55, which extend in the circumferential direction at respective positions corresponding to the arc 10 of the first split core 6A. Accordingly, each of the stopper 54 and the stopper 55 contacts both the first split core 6A and the second split core 6B adjacent to the first split core 6A to position, in the axial direction D1, the first split core 6A and the second split core 6B adjacent to the first split core 6A. This makes it possible to suppress displacement, in the axial direction D1, of the first split core 6A and the second split core 6B adjacent to the first split core 6A in the circumferential direction D2.

### (Embodiment 4)

Next, a stator structure of a power generator according to Embodiment 4 is described. In Embodiment 4, the description of the same configurations as those described in any of Embodiments 1 to 3 is omitted. In Embodiment 4, similar to Embodiment 3, the attachment is attached to a holder that is formed by a pair of half bodies.

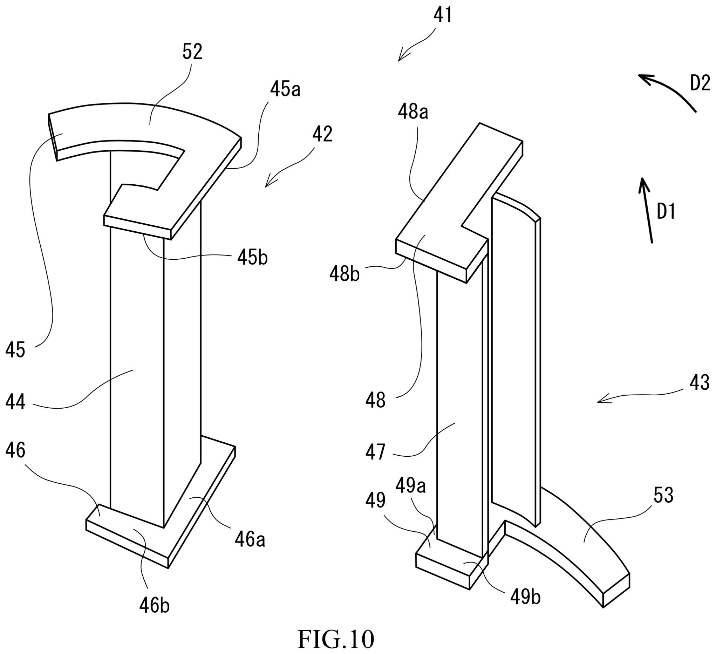

FIG. 10 is a perspective view of a holder 41 formed by a pair of half bodies. As shown in FIG. 10, a first half body 42 of the holder 41 includes: a first side plate 44, which is overlaid on the tooth 11 of the first split core 6A from one side in the circumferential direction D2 and which extends in the axial direction D1; a first end plate 45, which is connected to one end of the first side plate 44 in the axial direction D1 and which is overlaid on the axial end surface on one side of the first split core 6A in the axial direction D1; and a second end plate 46, which is connected to the other end of the first side plate 44 in the axial direction D1 and which is overlaid on the axial end surface on the other side of the first split core 6A in the axial direction D1. A second half body 43 of the holder 41 includes: a second side plate 47, which is overlaid on the tooth 11 of the first split core 6A from the other side in the circumferential direction D2 and which extends in the axial direction D1; a first end plate 48, which is connected to one end of the second side plate 47 in the axial direction D1 and which is overlaid on the axial end surface on one side of the first split core 6A in the axial direction D1; and a second end plate 49, which is connected to the other end of the second side plate 47 in the axial direction D1 and which is overlaid on the axial end surface on the other side of the first split core 6A in the axial direction D1.

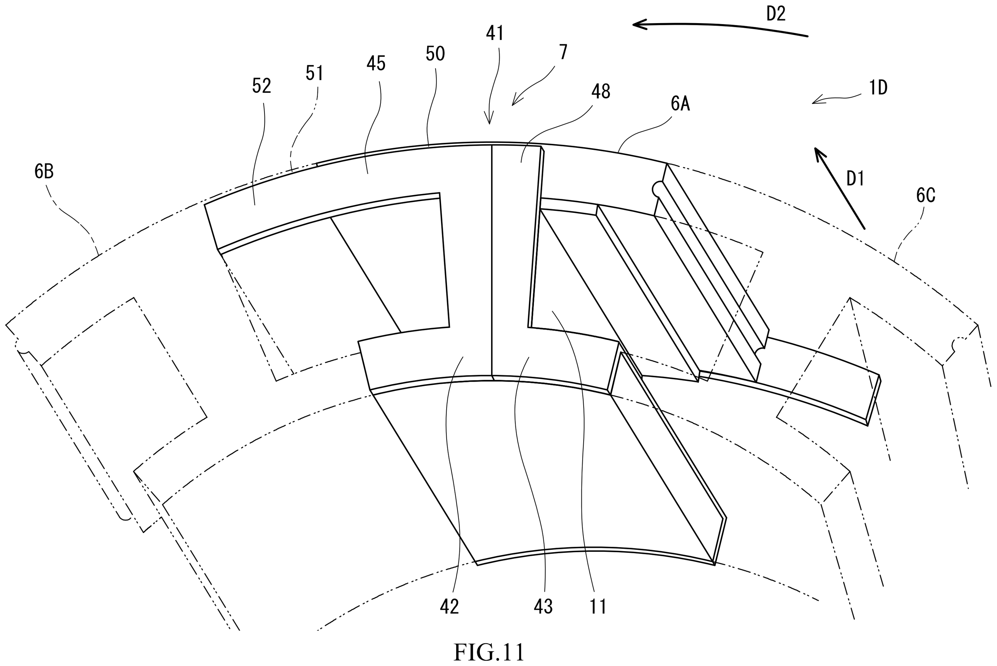

The first end plate 45 of the first half body 42 is overlaid on both an axial end surface 50 on one side of the first split core 6A and an axial end surface 51 on one side of the second split core 6B adjacent to the first split core 6A (FIG. 11). The second end plate 46 of the first half body 42 is overlaid on the tooth 11 of the first split core 6A, but is not overlaid on the axial end surface on the other side of the second split core 6B adjacent to the first split core 6A. The first end plate 45 of the first half body 42 includes a stopper 52, which extends in the circumferential direction at a position corresponding to the arc 10 of the first split core 6A and which positions the first split core 6A and the second split core 6B in the axial direction, whereas the second end plate 46 of the first half body 42 does not include a stopper that positions the first split core 6A and the second split core 6B in the axial direction. The first end plate 45 and the second end plate 46 of the first half body 42 include a contacting portion 45a and a contacting portion 46a, respectively, which contact the axial end surfaces of the tooth 11 of the first split core 6A. The first end plate 45 and the second end plate 46 further include a contacting portion 45b and a contacting portion 46b, respectively, which contact the axial end surfaces of the inner plate portion.

The first end plate 48 of the second half body 43 is overlaid on the tooth 11 of the first split core 6A, but is not overlaid on the axial end surface on one side of a third split core 6C adjacent to the first split core 6A. The second end plate 49 of the second half body 43 is overlaid on both the axial end surface on the other side of the first split core 6A and the axial end surface on the other side of the third split core 6C adjacent to the first split core 6A. The first end plate 48 of the second half body 43 does not include a stopper that positions, in the axial direction, the first split core 6A and the third split core 6C adjacent to the first split core 6A, whereas the second end plate 49 of the second half body 43 includes a stopper 53, which extends in the circumferential direction at a position corresponding to the arc 10 of the first split core 6A and which positions, in the axial direction, the first split core 6A and the third split core 6C adjacent to the first split core 6A. Further, the first end plate 48 and the second end plate 49 of the second half body 43 include a contacting portion 48a and a contacting portion 49a, respectively, which contact the axial end surfaces of the tooth 11 of the first split core 6A. The first end plate 48 and the second end plate 49 further include a contacting portion 48b and a contacting portion 49b, respectively, which contact the axial end surfaces of the inner plate portion.

FIG. 11 is a perspective view of the first split core 6A sandwiched between the pair of half bodies in a stator 1D of the power generator according to Embodiment 4. In FIG. 11, the second split core 6B adjacent to one side of the first split core 6A in the circumferential direction D2, and the third split core 6C adjacent to the other side of the first split core 6A in the circumferential direction D2, are indicated by two-dot chain line.

As shown in FIG. 11, the first end plate 45 of the first half body 42 of the holder 41 positions, in the axial direction D1, the first split core 6A and the second split core 6B adjacent to the first split core 6A, whereas the second end plate 46 of the first half body 42 of the holder 41 does not position the first split core 6A and the second split core 6B in the axial direction D1. The first end plate 48 of the second half body 43 does not position the first split core 6A and the third split core 6C in the axial direction D1, whereas the second end plate 49 of the second half body 43 positions the first split core 6A and the third split core 6C in the axial direction D1.

As shown in FIG. 10 and FIG. 11, the stator 1D of the power generator according to Embodiment 4 includes the attachment 7 attached to the holder 41. In the present embodiment, the attachment 7 is part of the holder 41. Portions of the holder 41, the portions serving to suppress displacement of the first split core 6A, the second split core 6B, and the third split core 6C, which are adjacent to each other, are configured as the attachment 7. The holder 41 includes the first half body 42 and the second half body 43. The holder 41 is attached to the first split core 6A by sandwiching the first split core 6A between the first half body 42 and the second half body 43 in the circumferential direction.

The first half body 42 and the second half body 43 of the holder 41 are each made of an insulating material. The first half body 42 and the second half body 43 are each made of, for example, a polyimide. The present embodiment describes a mode in which the first half body 42 and the second half body 43 are each made of an insulating material. However, the above embodiment is non-limiting. The first half body 42 and the second half body 43 may each be made of a conductive material with an insulation-treated surface.

According to the present embodiment, the shape of the first half body 42 and the shape of the second half body 43 may be made identical. Accordingly, the shapes of the half bodies may be made identical over the entire stator 1D. This makes it possible to reduce the manufacturing cost of the stator 1D, and consequently to reduce the manufacturing cost of the power generator 2.

In the techniques of the present disclosure, since the stator is assumed to be used in a high-temperature environment, embodiments in each of which the components such as the attachments, the holder, and the pair of half bodies are made of a heat-resistant polyimide have been described. However, in a case where the stator is not exposed to a high-temperature environment, the attachments, the holder, and the pair of half bodies need not be heat-resistant. In such a case, the attachments, the holder, and the pair of half bodies may be made of a material that is not heat-resistant.

The embodiments have been described above as examples of the techniques disclosed in the present application. However, the techniques in the present disclosure are not limited to the above embodiments, and are also applicable to other embodiments that are obtained by making changes, replacements, additions, omissions, etc., to the above-described embodiments as necessary. The components described above in the embodiments may be combined to form a new embodiment. For example, part of components or method in one embodiment may be applied to another embodiment. Some of the components in one embodiment may be separated from the other components in the embodiment and arbitrarily extracted therefrom. The components shown in the accompanying drawings and described in the detailed description may include not only components essential for solving the problems, but also components that are not essential for solving the problems and that are presented for the purpose of illustratively describing the above-described techniques.

The following items each disclose a preferred embodiment.

### [Item 1]

A stator structure of a power generator, the stator structure including: split cores that are located in a circumferential direction; an attachment that is overlaid, in an axial direction, on axial end surfaces of at least two adjacent split cores among the split cores; and coils that are wound around the split cores and the attachment.

### [Item 2]

The stator structure of a power generator according to item 1, wherein: each of the split cores includes an arc extending in the circumferential direction and a tooth extending in a radial direction from the arc, the tooth of each split core being wound with one of the coils; the split cores include a first split core and a second split core that are adjacent to each other; and the attachment includes: a base overlaid on an axial end surface of the tooth of the first split core; and a stopper overlaid on an axial end surface of the arc of the first split core and an axial end surface of the arc of the second split core.

### [Item 3]

The stator structure of a power generator according to item 2, wherein: each of the first split core and the second split core includes a circumferential end surface, and the circumferential end surface of the first split core and the circumferential end surface of the second split core contact each other in the circumferential direction; one of the circumferential end surface of the first split core or the circumferential end surface of the second split core includes a groove that extends in the axial direction and that is open in the axial direction; the other one of the circumferential end surface of the first split core or the circumferential end surface of the second split core includes a projection that extends in the axial direction; and the projection is fitted to the groove.

### [Item 4]

The stator structure of a power generator according to item 2 or 3, wherein an end of a portion of the base of the attachment, the portion being wound with one of the coils, is curved or tapered.

### [Item 5]

The stator structure of a power generator according to any one of items 1 to 4, wherein the attachment is an end plate located on the axial end surfaces of the split cores.

### [Item 6]

The stator structure of a power generator according to any one of items 1 to 5, further including a holder that holds at least one split core among the split cores in a sandwiching manner in the circumferential direction, wherein the attachment is attached to the holder.

### [Item 7]

The stator structure of a power generator according to any one of items 1 to 6, wherein the attachment includes an insulating material.

### [Item 8]

The stator structure of a power generator according to any one of items 1 to 6, wherein the attachment includes an insulation-treated surface.

### [Item 9]

The stator structure of a power generator according to item 6, wherein: the pair of half bodies includes a first half body and a second half body; the first half body includes: a first side plate that is overlaid on the tooth of the split core from one side in the circumferential direction and that extends in the axial direction; a first end plate that is connected to one end of the first side plate in the axial direction and that is overlaid on the axial end surface on one side of the split core in the axial direction; and a second end plate that is connected to the other end of the first side plate in the axial direction and that is overlaid on the axial end surface on the other side of the split core in the axial direction; and the second half body includes: a second side plate that is overlaid on the tooth of the split core from the other side in the circumferential direction and that extends in the axial direction; a first end plate that is connected to one end of the second side plate in the axial direction and that is overlaid on the axial end surface on one side of the split core in the axial direction; and a second end plate that is connected to the other end of the second side plate in the axial direction and that is overlaid on the axial end surface on the other side of the split core in the axial direction.

### [Item 10]

The stator structure of a power generator according to item 9, wherein the first end plate of the first half body is overlaid on both the axial end surface on one side of the corresponding split core and the axial end surface on one side of the split core adjacent to the corresponding split core.

### [Item 11]

The stator structure of a power generator according to item 10, wherein the second end plate of the first half body is overlaid on both the axial end surface on the other side of the corresponding split core and the axial end surface on the other side of the split core adjacent to the corresponding split core.

### [Item 12]

The stator structure of a power generator according to item 9, wherein a shape of the first half body and a shape of the second half body are identical.

### Reference Signs List

- 1A, 1B, 1C, 1D: stator
- 2: power generator
- 5: stator core
- 6, 6A, 6B, 6C: split core
- 7, 8: attachment
- 9: coil
- 10: arc
- 11: tooth
- 13: groove
- 15: projection
- 16: base
- 18: stopper
- 19: magnetic plate
- 30: holder
- 31: first half body
- 32: second half body
- 33: first side plate
- 34: first end plate
- 35: second end plate
- 36: second side plate
- 37: first end plate
- 38: second end plate
- 41: holder
- 42: first half body
- 43: second half body
- 44: first side plate
- 45: first end plate
- 46: second end plate
- 47: second side plate
- 48: first end plate
- 49: second end plate
- 52, 53, 54, 55: stopper

## Claims

1. A stator structure of a power generator, the stator structure comprising:
split cores that are located in a circumferential direction;
an attachment that is overlaid, in an axial direction, on axial end surfaces of at least two adjacent split cores among the split cores; and
coils that are wound around the split cores and the attachment.

2. The stator structure of a power generator according to claim 1, wherein:
each of the split cores includes an arc extending in the circumferential direction and a tooth extending in a radial direction from the arc, the tooth of each split core being wound with one of the coils;
the split cores include a first split core and a second split core that are adjacent to each other; and
the attachment includes:
a base overlaid on an axial end surface of the tooth of the first split core; and
a stopper overlaid on an axial end surface of the arc of the first split core and an axial end surface of the arc of the second split core.

3. The stator structure of a power generator according to claim 2, wherein:
each of the first split core and the second split core includes a circumferential end surface, and the circumferential end surface of the first split core and the circumferential end surface of the second split core contact each other in the circumferential direction;
one of the circumferential end surface of the first split core or the circumferential end surface of the second split core includes a groove that extends in the axial direction and that is open in the axial direction;
the other one of the circumferential end surface of the first split core or the circumferential end surface of the second split core includes a projection that extends in the axial direction; and
the projection is fitted to the groove.

4. The stator structure of a power generator according to claim 2 or 3, wherein
an end of a portion of the base of the attachment, the portion being wound with one of the coils, is curved or tapered.

5. The stator structure of a power generator according to claim 1 or 2, wherein
the attachment is an end plate located on the axial end surfaces of the split cores.

6. The stator structure of a power generator according to claim 1 or 2, further comprising a holder that holds at least one split core among the split cores in a sandwiching manner in the circumferential direction, wherein
the attachment is attached to the holder.

7. The stator structure of a power generator according to claim 1 or 2, wherein
the attachment includes an insulating material.

8. The stator structure of a power generator according to claim 1 or 2, wherein
the attachment includes an insulation-treated surface.

9. The stator structure of a power generator according to claim 6, wherein:
the holder includes a first half body and a second half body;
the first half body includes:
a first side plate that is overlaid on the tooth of the split core from one side in the circumferential direction and that extends in the axial direction;
a first end plate that is connected to one end of the first side plate in the axial direction and that is overlaid on the axial end surface on one side of the split core in the axial direction; and
a second end plate that is connected to the other end of the first side plate in the axial direction and that is overlaid on the axial end surface on the other side of the split core in the axial direction; and
the second half body includes:
a second side plate that is overlaid on the tooth of the split core from the other side in the circumferential direction and that extends in the axial direction;
a first end plate that is connected to one end of the second side plate in the axial direction and that is overlaid on the axial end surface on one side of the split core in the axial direction; and
a second end plate that is connected to the other end of the second side plate in the axial direction and that is overlaid on the axial end surface on the other side of the split core in the axial direction.

10. The stator structure of a power generator according to claim 9, wherein
the first end plate of the first half body is overlaid on both the axial end surface on one side of the corresponding split core and the axial end surface on one side of the split core adjacent to the corresponding split core.

11. The stator structure of a power generator according to claim 10, wherein
the second end plate of the first half body is overlaid on both the axial end surface on the other side of the corresponding split core and the axial end surface on the other side of the split core adjacent to the corresponding split core.

12. The stator structure of a power generator according to claim 9, wherein
a shape of the first half body and a shape of the second half body are identical.
